# EUROPÄISCHE PATENTSCHRIFT

(11) **EP 2 943 361 B1**
(45) Veröffentlichungstag und Bekanntmachung des Hinweises auf die Patenterteilung: **20.07.2016**
(21) Anmeldenummer: 13818978.2
(22) Anmeldetag: 11.12.2013
(51) Int. Cl.: B60G 7/00, B60G 13/00, B60G 17/0165, F16F 15/00, F16F 15/02, F16F 9/54, B60G 15/00

(54) **AKTIVES DÄMPFERSYSTEM**
ACTIVE DAMPER SYSTEM
SYSTÈME AMORTISSEUR ACTIF

(30) Priorität: 11.01.2013 DE 102013000371
(43) Veröffentlichungstag der Anmeldung: 18.11.2015
(73) Patentinhaber: Audi AG, 85045 Ingolstadt (DE)
(72) Erfinder: WILLEMS, Marco, 85053 Ingolstadt (DE)
(74) Vertreter: Reichert, Thomas Klaus
(86) Internationale Anmeldenummer: PCT/EP2013/003737
(87) Internationale Veröffentlichungsnummer: WO 2014/108155

(56) Entgegenhaltungen:
- EP-A1- 1 529 982
- WO-A1-2005/001308
- WO-A1-2013/029717
- DE-A1- 4 219 151
- DE-A1- 19 642 827
- DE-A1-102004 032 470
- DE-A1-102008 046 876
- DE-B3- 10 302 790
- JP-A- H0 396 412

## Beschreibung

Die Erfindung betrifft ein aktives Dämpfersystem zur Dämpfung hochfrequenter Schwingungen des Fahrzeugaufbaus gemäß dem Oberbegriff des Anspruchs 1 sowie ein Verfahren zur Dämpfung eines hochfrequenten Schwingungseintrags in den Fahrzeugaufbau gemäß dem Oberbegriff des Anspruchs 3.

Ein passiver Schwingungsdämpfer ist in der DE 199 35 391 A1 offenbart.

Nach dem Stand der Technik, wie in der DE 10 2008 046 876 A1 offenbart, ist es bekannt, eine Schwingungsoptimierung zwischen Rad und Aufbau dadurch zu erreichen, dass passive Dämpfersystem, die am Beispiel eines Federbeins unter Verwendung einer Ventilsteuerung mit einer Kolbenzylinderanordnung beschrieben werden, so beeinflusst werden, dass eine Dämpfung des Fahrzeugaufbaus erreicht wird.

Nach der DE 10 2008 046 876 A1 kann die Dämpfung der Schwingungen durch Einstellung der Dämpfungskraft bestimmt werden. Die Dämpfungskraft wird durch Ansteuerung einer Stelleinrichtung erreicht, indem die vertikale Beschleunigung des Fahrzeugaufbaus und die vertikale Beschleunigung eines Rades sensorisch erfasst werden. Mittels einer Signalverarbeitungsanlage wird ein Steuersignal für die Stelleinrichtungseinstellung der dualmodularen Dämpfungskraft erzeugt.

Dieses Verfahren hat den Nachteil, däss eine Beeinflussung des gesamten Federdämpferelements notwendig ist, um die Schwingungsübertragung zu unterbinden, was wiederum Auswirkungen auf das Fahrverhalten hat.

Eine gattungsgemäße Einrichtung zur Schwingungsdämpfung ist aus der DE 196 42 827 A1 bekannt.

Die DE 10 2004 032 470 A1 betrifft ein aktives Dämpferläger zur Abstützung eines Stoßdämpfers, umfassend eine Spulenanordnung, die auf einen Anker, der mit einem Stoßdämpfer verbunden ist, in axialer Richtung einwirkt, um das Schwingungsverhalten zu beeinflussen. Die Stellgröße wird abhängig von der Beschleunigung des Fahrzeugaufbaus und des Stoßdämpfers eingestellt.

Wie auch in der DE 10 2008 046 876 A1 wird hier die Beschleunigung von Rad und Fahrzeugaufbau gemessen.

Es ist Aufgabe der Erfindung, eine verbesserte Vorrichtung zur Dämpfung des Fahrzeugaufbaus sowie ein entsprechendes Verfahren vorzuschlagen.

Die Aufgabe wird durch die kennzeichnenden Merkmale der Ansprüche 1 und 3 in Verbindung mit ihren Oberbegriffsmerkmalen gelöst.

In bekannter Weise weist das erfindungsgemäße Dämpfersystem ein Dämpferlager zur Abstützung einer Fahrwerkskomponente am Fahrzeugaufbau auf. Das Dämpferlager umfasst zudem ein erstes Lagerelement zur Befestigung des Lagers an dem Fahrzeugaufbau und ein zweites Lagerelement zur Befestigung an der Fahrwerkskomponente selbst. Ferner ist ein aktives Stellelement zwischen Fahrzeugaufbau und Radträger vorgesehen, welches durch einen Regler angesteuert wird. Der Regler besitzt als Eingangsgröße die Beschleunigung des Fahrzeugaufbaus, insbesondere die Vertikalbeschleunigung, wofür ein Beschleunigungssensor am Fahrzeugaufbau vorgesehen ist, wobei das erste Lagerelement und das zweite Lagerelement durch das aktive Stellelement verbunden sind,

Erfindungsgemäß ist das zweite Lagerelement über eine Elastomer-Verbindung an die Fahrwerkskomponente angekoppelt und ein Beschleunigungssensor ist vorgesehen, der am zweiten Lagerelement angeordnet ist. Dieser Sensor misst demzufolge die Vertikalbeschleunigung des zweiten Lagerelements Dadurch wird eine Verbesserung des Dämpfungsverhaltens erreicht.

Die Eingangsgrößen für den Regler zur Ansteuerung des aktiven Stellelements bilden somit die Fahrzeugaufbaubeschleunigung und die Beschleunigung des zweiten Lagerelements. '

Der Regler ist insbesondere so ausgebildet, dass dieser das aktive Stellelement so ansteuert, dass die Vertikalbeschleunigung des Fahrzeugaufbaus minimiert wird. Der Regler kann als PID, PD oder gegebenenfalls als PI-Regler ausgebildet sein.

Beispielsweise kann die Fahrwerkskomponente eine Kolbenstange eines Dämpfers sein, wobei die Kolbenstange über eine Elastomerverbindung mit einem Außenring, der das zweite Lagerelement darstellt, verbunden ist. Dieser Außenring ist mit dem Beschleunigungssensor für das zweite Lagerelement versehen. Der Außenring ist über einen aktiven Steller insbesondere einem Piezo-Aktuator am Fahrzeugaufbau, insbesondere am Federbeindom des Fahrzeugs gelagert.

In einer vorteilhaften Ausgestaltung der Erfindung kann der Beschleunigungssensor zur Messung der Vertikalbeschleunigung des Fahrzeugaufbaus in der Nähe vorzugweise am Federbeindom vorgesehen sein.

Im Wesentlichen arbeitet das aktive Stellelement gegenphasig zur Bewegung des Außenrings. Um möglichst wenig hochfrequente Schwingung auf den Federbeindom zu übertragen.

Dadurch wird die Vertikalbeschleunigung der Karosserie im Bereich des Federbein-Doms erheblich reduziert, was wiederum die akustischen Auffälligkeiten in Folge der Straßenanregung minimiert.

Im Weiteren wird hier ein Verfahren zur Dämpfung eines hochfrequenten Schwingungseintrags in den Fahrzeugaufbau über die Fahrwerkskomponente vorgeschlagen, wobei die Fahrwerkskomponente über ein Dämpferelement umfassend ein erstes Lagerelement mit einem aktiven Stellelement mit einem zweiten Lagerelement verbunden ist. Durch Beeinflussung des aktiven Stellelements kann der Regler die Vertikalbeschleunigung des Fahrzeugaufbaus minimieren. Der Regler nutzt dazu die Vertikalbeschleunigung des Fahrzeugaufbaus sowie die Vertikalbeschleunigung des zweiten Lagerelements als Eingangsgröße, wobei die Fahrzeugaufbaubeschleunigung die Regelgröße darstellt, die es zu minimieren gilt.

Zur Minimierung der Fahrzeugaufbaubeschleunigung ist erfindungsgemäß vorgesehen, dass der am zweiten Lagerelement angeordnete Beschleunigungssensor die Störgröße der Außenringbeschleunigung erfasst. Diese Störgröße findet Eingang in den Regelalgorithmus des Reglers. Durch die Berücksichtigung der Störgröße im Regler kann die Regelung der Fahrzeugaufbaubeschleunigung am ersten Lagerelement effizient minimiert werden.

Weitere Vorteile und Anwendungsmöglichkeiten der vorliegenden Erfindung ergeben sich aus der nachfolgende Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine schematische Ansicht eines Dämpfersystems, und
- Fig. 2: eine Symboldarstellung der Reglerstruktur.

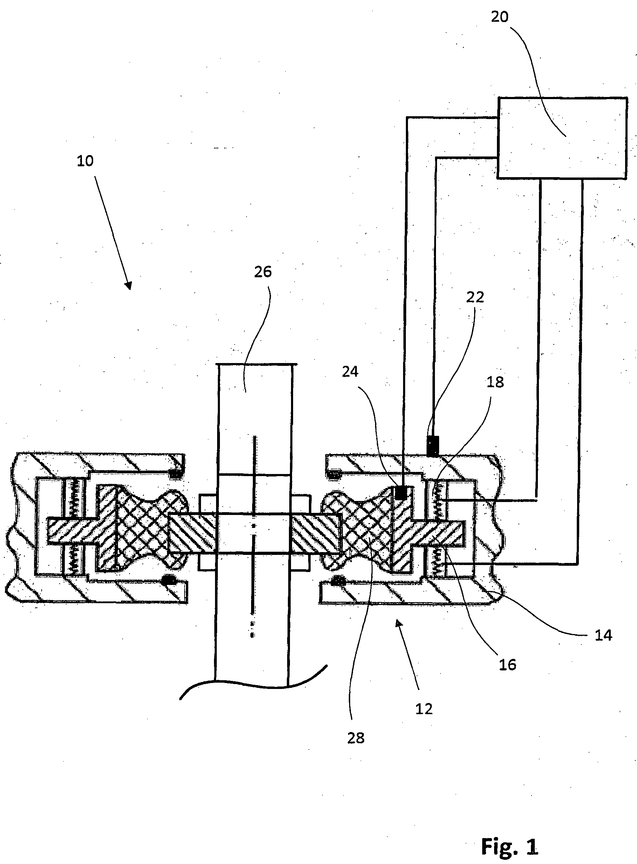

Wie Fig.1 zu entnehmen, ist das erste Lagerelement 14 mit dem Federbein-Dom, also dem Fahrzeugaufbau, verbunden. Der dem ersten Lagerelement 14 zugeordnete Beschleunigungssensor 22 misst demzufolge die Beschleunigung des Fahrzeugaufbaus in diesem Bereich.

Das zweite Lagerelement 16 ist als Außenring eines Elastomer-Lagers ausgebildet. Der Außenring ist über eine Elastomer-Komponente 28 mit einer Fahrwerkskomponente, im vorliegenden Fall mit einer Kolbenstange 26 eines Federbeins, verbunden.

Zur Regelung der Beschleunigung des Fahrzeugaufbaus sind die Beschleunigungssensoren 22,24 mit der Reglereinheit 20 verbunden.

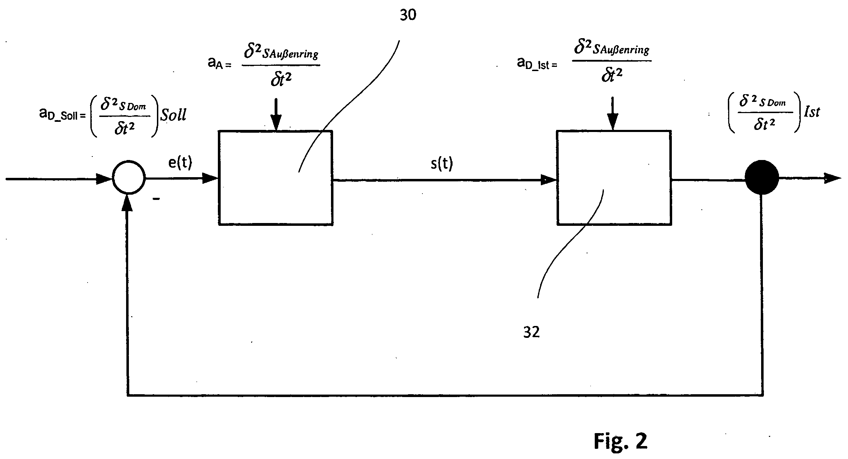

Die Funktionsweise wird anhand der symbolischen Darstellung der Reglereinheit 20 in Fig. 2 näher erläutert.

Fig. 2 zeigt die symbolische Reglerstruktur der Reglereinheit 20.

Die Reglereinheit 20 umfasst den Regler 30. Als Eingangsgröße des Reglers 30 ist die Abweichung e(t), die sich aus der Differenz der gewünschten vertikalen Fahrzeugaufbaubeschleunigung (d²s_{Dom} /dt²)_{Soll} und aus der tatsächlichen vom Beschleunigungssensor 22 gemessenen Fahrzeugaufbaubeschleunigung (d²s_{Dom} /dt²)_{Ist} = a_{D} ergibt. Im vorliegenden Beispiel entspricht die Fahrzeugaufbaubeschleunigung der Beschleunigung des Federbein-Doms.

Der Regler 30 gibt einen Stellsignal s(t) zur Ansteuerung des aktiven Stellelements 18 aus. Die Ausgabe des Stellsignals erfolgt unter Berücksichtigung der Beschleunigung des zweiten Lagerelements 16, hier des Außenrings, d² s_{Außenring} /dt ² = a_{A}. Da die Beschleunigung des Außenrings auch als Störgröße in die Regelstrecke 32 einfließt, kann auf diese Weise eine äußerst effiziente Minimierung hochfrequenter Schwingungen im Fahrzeugaufbau gewährleistet werden.

### Bezugszeichenliste

- 10: Dämpfersystem
- 12: Dämpferlager
- 14: erstes Lagerelement
- 16: zweites Lagerelement
- 18: aktives Stellelement
- 20: Reglereinheit
- 22: Beschleunigungssensor
- 24: Beschleunigungssensor
- 26: Kolbenstange
- 28: Elastomer-Komponente
- 30: Regler
- 32: Regelstrecke

- a_{D}: Beschleunigung Dom
- a_{A}: Beschleunigung Außenring

- s(t): Stellgröße für aktives Stellelement
- e(t): Abweichung

## Patentansprüche

1. Aktives Dämpfersystem (10) zur Dämpfung hochfrequenter Schwingungsanregung des Fahrzeugaufbaus, wobei ein Dämpferlager (12) zur Abstützung einer Fahrwerkskomponente am Fahrzeugaufbau vorgesehen ist und das Dämpferlager (12) einen erstes Lagerelement (14) zur Befestigung an dem Fahrzeugaufbau und ein zweites Lagerelement (16) zur Befestigung an der Fahrwerkskomponente umfasst, ferner ein aktives Stellelement (18) vorgesehen ist, wobei eine Reglereinheit (20) und ein die Beschleunigung des Fahrzeugaufbaus messender Beschleunigungssensor (22) vorgesehen sind, wobei die Reglereinheit (20) als Eingangsgröße die Vertikalbeschleunigung des Fahrzeugaufbaus (a_{D}) aufweist, wozu die Reglereinheit (20) mit dem Beschleunigungssensor (22) verbunden ist, ferner das aktive Stellelement (18) durch die Reglereinheit (20) beeinflusst wird, wobei das erste Lagerelement (14) und das zweite Lagerelement (16) über das aktive Stellelement (18) verbunden sind , **dadurch gekennzeichnet, dass** das zweite Lagerelement (16) über eine Elastomerverbindung an die Fahrwerkskomponente angekoppelt ist und ein Beschleunigungssensor (24) am zweiten Lagerelement (16) angeordnet ist, der mit der Reglereinheit (20) verbunden ist.

2. Aktives Dämpfersystem (10) nach Anspruch 1, **dadurch gekennzeichnet, dass** das zweite Lagerelement (16) ein Außenring des Dämpferlagers (12) ist, der über eine Elastomerkomponente (28) mit einer Kolbenstange (26) verbunden ist.

3. Verfahren zur Dämpfung eines hochfrequenten Schwingungseintrags in den Fahrzeugaufbau mit einem aktiven-Dämpfersystem (10) nach Anspruch 1 oder 2, **dadurch gekennzeichnet, dass** die Vertikalbeschleunigung des Fahrzeugaufbaus (a_{D}) und die Vertikalbeschleunigung des zweiten Lagerelements (a_{A}) gemessen wird und das aktive Stellelement (18) derart durch einen Regler (30) beeinflusst wird, dass die Schwingungsreduktion durch Minimierung der Vertikalbeschleunigung des Fahrzeugaufbaus (a_{D}) erreicht wird, wobei die Vertikalbeschleunigung des zweiten Lagerelements (a_{A}) das Verhalten des Reglers (30) beeinflusst.

4. Verfahren nach Anspruch 3, **dadurch gekennzeichnet, dass** der Regler (30) als PID, PI oder PD-Regler ausgebildet ist.

## Claims

1. Active damper system (10) for damping high-frequency vibration excitation of a vehicle body, whereby a damper mounting (12) is provided to attach a suspension component to the vehicle body and the damper mounting (12) comprises a first mounting element (14) for attachment to the vehicle body and a second mounting element (16) for attachment to the suspension component, and furthermore an active adjusting element (18) is provided with a controller unit (20) and an acceleration sensor (22) for measuring the acceleration of the vehicle body, the vertical acceleration (a_{D}) of the vehicle body being an input variable for the controller unit (20), for which purpose the controller unit (20) is connected to the acceleration sensor (22), and furthermore the active adjusting element (18) is influenced by the controller unit (20) in that the first mounting element (14) and the second mounting element (16) are connected by the active adjusting element (18), **characterised in that** the second mounting element (16) is coupled to the suspension component by an elastomer connection and the acceleration sensor (24) is arranged on the second mounting element (16), which is connected with the controller unit (20)

2. Active damper system (10) as in claim 1, **characterised in that** the second mounting element (16) is an outer ring of the damper mounting (12) connected to a piston rod (26) by an elastomer component (28).

3. Method of damping a high-frequency vibration input to a vehicle body with an active damper system (10) as in claims 1 or 2, **characterised in that** the vertical acceleration (a_{D}) of the vehicle body and the vertical acceleration (a_{A}) of the second mounting element are measured and the active adjusting element (18) is influenced by a controller (30) in such a way that the reduction in vibration is achieved by minimising the vertical acceleration of the vehicle body (a_{D}) **in that** the vertical acceleration (a_{A}) of the second mounting element influences the behaviour of the controller (30).

4. Method as in claim 3, **characterised in that** the controller (30) is designed as a PID, PI or PD controller.

## Revendications

1. Système d'amortissement actif (10) pour l'amortissement d'une excitation d'oscillation à haute fréquence de la carrosserie de véhicule, dans lequel un palier d'amortissement (12) pour l'appui d'un mécanisme de roulement sur la carrosserie de véhicule est prévu et le palier d'amortissement (12) comporte un premier élément de palier (14) pour la fixation sur la carrosserie de véhicule et un second élément de palier (16) pour la fixation sur le mécanisme de roulement, de plus un élément de réglage (18) actif est prévu, dans lequel une unité de régulation (20) et un capteur d'accélération (22) mesurant l'accélération de la carrosserie de véhicule sont prévus, dans lequel l'unité de régulation (20) présente comme grandeur d'entrée l'accélération verticale de la carrosserie de véhicule (a_{D}), pour quoi l'unité de régulation (20) est reliée au capteur d'accélération (22), de plus l'élément de réglage (18) actif est influencé par l'unité de régulation (20), dans lequel le premier élément de palier (14) et le second élément de palier (16) sont reliés par l'élément de réglage (18) actif, **caractérisé en ce que** le second élément de palier (16) est couplé par une liaison en élastomère au composant de mécanisme de roulement et un capteur d'accélération (24) est agencé sur le second élément de palier (16) qui est relié à l'unité de régulation (20).

2. Système d'amortissement actif (10) selon la revendication 1, **caractérisé en ce que** le second élément de palier (16) est un anneau extérieur du palier d'amortissement (12) qui est relié par un composant en élastomère (28) à une tige de piston (26).

3. Procédé d'amortissement d'une entrée d'oscillation à haute fréquence dans la carrosserie de véhicule avec un système d'amortissement actif (10) selon la revendication 1 ou 2, **caractérisé en ce que** l'accélération verticale de la carrosserie de véhicule (a_{D}) et l'accélération verticale du second élément de palier (a_{A}) sont mesurées et l'élément de réglage (18) actif est influencé par un régulateur (30) de telle manière que la réduction d'oscillation soit obtenue par la minimisation de l'accélération verticale de la carrosserie de véhicule (a_{D}), dans lequel l'accélération verticale du second élément de palier (a_{A}) influence le comportement du régulateur (30).

4. Procédé selon la revendication 3, **caractérisé en ce que** le régulateur (30) est réalisé comme un régulateur PID, PI ou PD.
